# EUROPEAN PATENT SPECIFICATION

(11) **EP 0 972 440 B1**
(45) Date of publication and mention of the grant of the patent: **24.11.2004**
(21) Application number: 99203307.6
(22) Date of filing: 20.04.1994
(51) Int. Cl.: A01J 25/11

(54) **Drainage pipe with perforations for draining whey from whey/curd mass, and device provided with at least one such pipe**
Dränagerohr mit Perforation zum Dränieren von Molke aus einer Molke/Bruch Masse; Vorrichtung mit zumindest einem solchen Rohr
Tuyau de drainage perforé, pour le drainage du petit lait d'une masse petit lait/caillé; dispositif muni d'au moins un tel tuyau

(30) Priority: 20.04.1993 NL 9300664
(43) Date of publication of application: 19.01.2000
(62) Divisional of application: 94201081.0
(73) Proprietor: Tetra Laval Holdings & Finance S.A., 1009 Pully (CH)
(72) Inventor: Schouten, Frank, 8435 WR Donkerbroek (NL)
(74) Representative: Prins, Adrianus Willem, Mr. Ir.

(56) References cited:
- EP-A- 0 367 353
- BE-A- 688 365
- FR-A- 2 517 512
- US-A- 3 982 480

## Description

The invention relates to a drainage pipe with perforations for draining whey from a whey/curd mass.

Such a drainage pipe used in a vertical column is disclosed in NL-A-8802715.

In the preparation of cheese, milk is heated up to approximately 30°C, enzymes and a lactic acid bacterial culture are then added, following which the milk becomes unstable. Within a short time the liquid milk changes into a cuttable mass, a smooth gel which is cut into pieces, for instance in a so-called cheesemaking tank. Interaction between the protein chains present causes the pieces to shrink and spontaneously expel moisture, a process known as syneresis. The moisture released - a cloudy, pale green liquid - is the whey.

Some of the whey is drained off, and the curd (i.e. the solids from which most of the whey has already been removed) is then guided through a drainage device. The curd blocks thus produced are placed some time later in a cheese vat and pressed.

The known drainage device is provided with one or more stainless steel perforated drainage pipes. It is vitally important that the whey should be drained from the whey/curd mass in a controlled manner. Poor drainage of the curd can cause quality problems. For instance, cracks in the curd block can give rise to mould. If whey flows out too quickly, curd is entrained against the perforations and thus can block or clog those perforations.

In the case of the known drainage device, as disclosed in NL-A-8802715, the drainage is limited by a liquid pressure gradient in the discharge channels for the whey. The outflow of whey is regulated by placing a mechanical barrier, with the result that a liquid counterpressure is created. When the level of the liquid counterpressure is set, the outflow velocity of the whey is controlled. Counterpressure is important particularly in the case of drainage pipes with a diameter greater than 150 mm.

However, such a system cannot be controlled accurately, because the flowability of the whey through the curd can differ from place to place by a factor of 1000. However, such accurate setting and variation of the liquid counterpressure is not possible. For that reason, caution is exercised, and very low limit values are selected, so that ultimately too much whey remains in the curd block.

Another control system is that in which the outflow of the whey from a drainage column is controlled by a valve. In this case the control is directed towards a quantity of whey, and not towards a predetermined liquid counterpressure. Such a solution is known, for example, from a thesis by J.C. Akkerman, entitled "Drainage of curd", L.U. Wageningen, 1992.

A disadvantage of this solution is that whey remains in the drainage pipe when the valve is shut, which is undesirable from the point of view of hygiene.

Furthermore, the disadvantage of both control systems is that expensive facilities such as pipes, valves and measuring and control equipment have to be provided.

In the case of the drainage pipe of NL-A-8802715, which is made from stainless steel, about 50% of the entire pipe length is perforated.

The perforations are slit perforations with slit dimensions of, for example, 11 by 0.8 mm. The wall thickness of the pipe is 0.8 mm. Due to the relatively large slits, a large quantity of "curd dust" is entrained in the top part of the drainage pipe. The top end of the drainage pipe is therefore provided with a blind part, in order to overcome this disadvantage, i.e. too rapid outflow of whey and curd dust.

The annular space between at least one drainage pipe and a sleeve disposed around it in the above mentioned NL-A-8802715 is divided by means of horizontal partition into counterpressure chambers. The whey flowing out through the perforations into said space is drained off from said space through the counterpressure chambers and riser pipes. Drainage of the whey/curd column present inside the drainage pipe is regulated by means of the counterpressure chambers in conjunction with the riser pipes, so that a manageable curd block is obtained at the bottom of the drainage pipe.

At the places where the horizontal partitions are situated, the drainage pipe also has blind parts, on account of the prevailing pressure differences. Without these blind parts, the emerging whey would take the line of least resistance and could flow out of the annular space around the flange or seal to a part of the annular space lying below said flange or seal.

The presence of the blind parts on the drainage pipe means that not all of the surface over the length of the pipe can be used for drainage. This has the disadvantage that drainage does not take place efficiently over the entire surface of the pipe.

For production reasons, it is not possible to reduce the slit width of the perforations, since the slit width is related to the sheet thickness of the drainage pipe. Thinner sheet is almost impossible to weld. In the manufacture of a drainage pipe, a flat perforated sheet is, for example, welded into a circular shape, giving a drum-shaped or right circular cylinder. No slits are present at the position of the weld, which is about 1 cm wide. There will thus be no drainage of whey at this position either.

In view of the wall thickness of the stainless steel sheet, slits over more than 50% of the surface produce a pipe which is more difficult to handle, because the mechanical strength leaves something to be desired.

Another disadvantage of stainless steel is the relatively high weight. This means that aids have to be used when the pipes are being changed.

It is an object of the invention to provide a drainage pipe of the above identified type which at least in part obviates the disadvantages of the known stainless steel drainage pipes.

The drainage pipe according to the invention is characterized in that the perforations are formed by small holes, wherein the hole size is in a range of 0,05 - 3 mm, while the hole density is in a range of 5 - 50,000 holes/cm², and in that the drainage pipe is made from plastics material. The plastics material advantageously may be polyethylene.

Providing a large number of holes, each of which is small in size, in the surface of the drainage pipe means that a larger open surface, which is available for the drainage of whey, is obtained. The result is that the drainage of the whey/curd mass will be more efficient, without the mechanical strength of the drainage pipe being reduced.

Where the hole size is less than 0.05 mm, drainage cannot be efficient, while at a hole size greater than 3 mm too much whey can flow out of the whey/curd mass. In the latter case there is also a risk of curd dust and curd particles flowing with the whey out of the pipe.

The hole density is connected with the hole size. At a hole density greater than 50,000, too much whey may be drained off. In that case the mechanical strength of the pipe is also too low. At a hole density of less than 5 holes/cm² the open surface formed by the holes is too small to produce efficient drainage.

In an advantageous embodiment of the drainage pipe according to the invention the hole size and/or the density of the holes is varied over the surface of the pipe.

In the case of this embodiment the holes can be made in the pipe in such a way that a natural counterpressure is built up. In this way efficient drainage is obtained and, if the size of the holes is carefully selected, there can also be a great reduction in curd dust loss. Since a natural counterpressure is built up by the holes, further measures for setting a counterpressure with mechanical aids are unnecessary. The commissioning period can therefore be made shorter, and expensive facilities such as valves, pipes, control etc. are no longer necessary, with the result that a considerable cost saving is obtained.

With the drainage pipe according to the invention, the same quantity of whey can be drained from the whey/curd mass in a shorter time than in the case of the known drainage pipe, with the result that the production of curd blocks is increased per unit of time.

It is also possible to set the same residence time, so that a larger quantity of whey per unit time can be drained off and the curd block obtained contains a smaller quantity of whey. The quantity of whey to be removed depends on the desired composition of the cheese type. The whey/curd mass must contain some whey, otherwise the sliding properties of the mass are lowered, and as a result the mass could stick in the drainage pipe.

The natural counterpressure is advantageously built up by increasing the open surface, formed by the holes, from one end of the pipe to the other end of the pipe. The increase in the open surface is more preferably uniform. Due to the fact that the entire surface of the pipe is available for drainage, the drainage of whey from the whey/curd mass is more efficient.

If desired, the drainage pipe can be provided over the entire surface with holes of the same size and density. The open surface is greater than the open surface of the slits of the known drainage pipe, with the result that a larger quantity of whey can be drained from the whey/curd mass. In this case additional measures for setting the counterpressure are necessary.

In accordance with claim 1 the drainage pipe is made of plastic. The mechanical strength of such a plastic pipe (wall thickness 1 - 10 mm, usually about 5 mm) and the small dimensions of the holes allows a greater part (up to about 90%) of the pipe to be perforated. This produces more efficient drainage. No welded joints are present either, with the result that the holes can be provided over the entire surface, distributed over the length of the pipe.

Due to the larger perforated surface of a plastic pipe, the duration of drainage will also be greater. Therefore, while residence time remains the same, a longer period of drainage of the whey/curd mass in the pipe is possible. Such a plastic pipe is also easier to handle, on account of its lower weight.

The pipe is preferably made of polyethylene (PE), because of the inert nature of this plastic.

In order to produce efficient drainage over the entire surface of the pipe and to build up a natural counterpressure, the open surface in the part of the pipe which is being used as the top is preferably made smaller than the open surface in the part of the pipe which is being used as the bottom.

The open surface, formed by the holes, can be varied through variation of the hole size and/or the hole density over the surface of the pipe. The density of the holes is preferably 20 to 35/cm², and more preferably 25 to 30/cm², in particular 28/cm². The hole size is preferably 0.1 to 1 mm, and more preferably 0.3 to 0.5 mm.

It is clear that a larger open surface can be obtained over the length of the plastic pipe than in the case of a stainless steel pipe.

The shape of the perforations is preferably round. However, other shapes such as square, rectangular, oval or triangular are also possible.

In order to produce efficient drainage over the entire surface of the pipe, the holes are preferably disposed in the pipe in a regular grid pattern.

In another embodiment, the holes can be provided arbitrarily in the pipe.

In order to improve the drainage and sliding properties of the pipe, knife cuts can be present on the inner surface of the pipe. This improves the drainage of whey from the whey/curd mass, while the knife cuts are of such small dimensions that no curd particles can remain therein and thus impede the downward slide of the whey/curd mass. These so-called knife cuts are known per se as applied to the inner surface of a plastics cheese mould as disclosed in Dutch patent application 8,801,381, which has been laid open for inspection.

The invention also relates to a device for the drainage of whey from a whey/curd mass, comprising at least one drainage pipe of the type described above and also means for feeding in whey/curd mass and draining whey and discharging the curd block.

It is observed that FR-A-2517512 and NL-A-8801381 both disclose a cheese mould made of plastics. A cheese mould, however, is a pan-shaped device which is used for pressing a portion of cheese curd by means of a pressure device in order to form a cheese having a rind. In a drainage pipe of a vertical column for draining whey from a whey/curd mixture no such pressing takes place. Also in a drainage pipe the whey of a whey/curd mixture is removed and during the draining process the curd is gradually and in a continuous movement lowered from the top of the drainage pipe to the bottom. Thus it is important that the curd be able to move smoothly through the pipe, which becomes more and more difficult as the curd becomes drier towards the lower part of the drainage pipe. Such a movement of the curd of course does not occur in a cheese mould.

Finally at the bottom of the drainage pipe blocks of curd are separated one by one from the column of curd in the pipe. Said blocks may be pressed in a cheese mould if so desired.

The invention will be explained in greater detail with reference to the drawings, in which:
Fig. 1 shows diagrammatically a drainage device according to the prior art;
fig. 2 shows a drainage device according to the invention; and
figs. 3a - 3e are examples of possible patterns of the holes in a drainage pipe according to the invention.

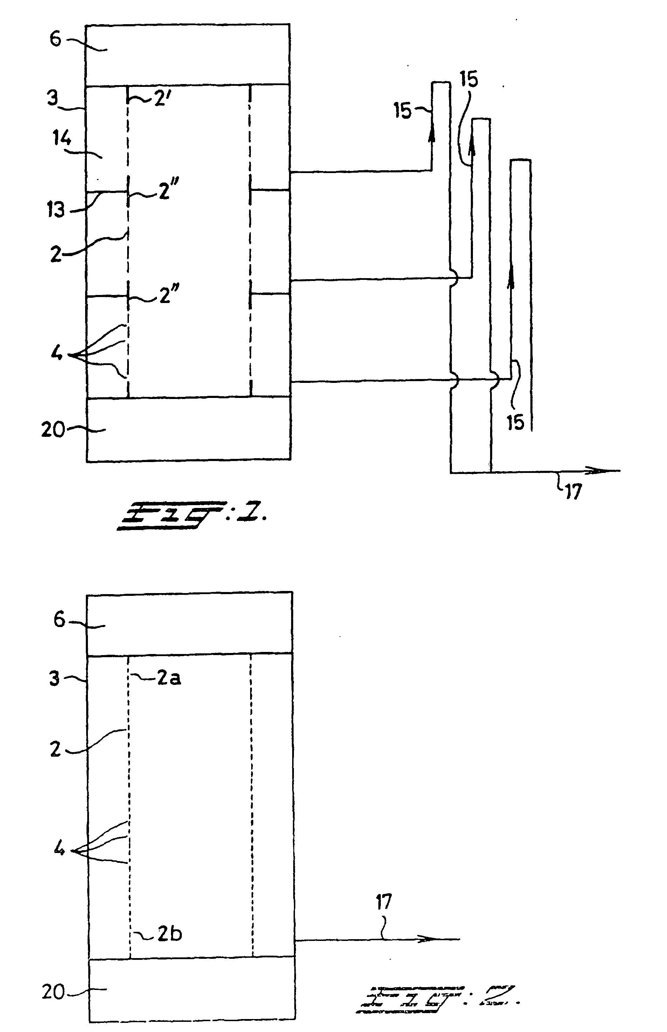

In the case of the known device as disclosed in NL-A-8802715 and illustrated diagrammatically in Fig. 1 the whey/curd mass is guided through means 6 for feeding thereof into the drainage pipe 2, which is provided with perforations 4. The drainage pipe 2 is surrounded by a sealed sleeve 3. The whey emerging from the mass flows through the perforations and is further discharged through riser pipes 15 and subsequently through a pipe 17. Reference number 20 indicates means for discharging the curd block at the bottom of the drainage device.

Reference number 2' indicates a blind part of the drainage pipe 2, which has the function of preventing premature emergence of whey and of reducing curd dust lost at the top of the pipe. Partitions 13 divide the annular spaces between the pipe 2 and the sleeve 3 into counterpressure chambers 14. The blind parts 2'' prevent leakage flows from one counterpressure chamber 14 to a lower chamber.

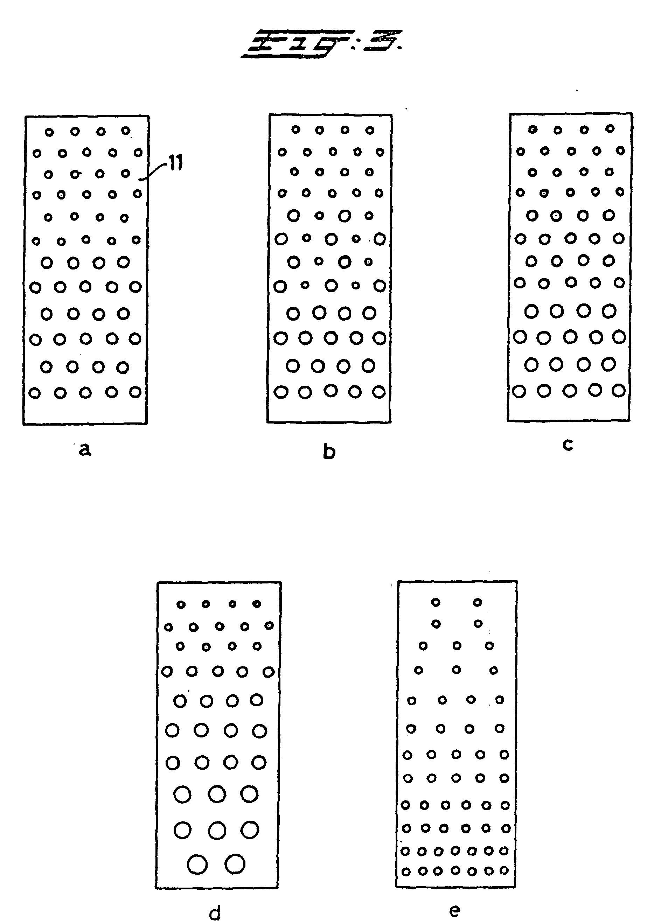

Fig. 2 shows diagrammatically a device according to the invention, in which a drainage pipe according to the invention is used. The parts of the device which are identical to the parts of the known device according to fig. 1 are indicated by the same reference numbers in fig. 2.

The device according to fig. 2 consists of a plastic drainage pipe 2 with holes 4, around which a concentric sleeve 3 is disposed. In this example the holes 4 are uniformly distributed over the entire surface of the length of the drainage pipe 2. Means 6 for feeding whey/curd mass to the drainage pipe are disposed on the top side of the drainage pipe 2, while means 20 for discharging the curd blocks are present on the bottom side. The outflowing whey is removed by means 17 for draining whey from the drainage pipe 2 and sleeve 3. As can be seen clearly from fig. 2, the entire surface over the length of the drainage pipe 2 is provided with holes 4. This figure also shows the relatively simple design of the device according to the invention compared with the known device, because the device according to the invention comprises no additional facilities for setting the counterpressure.

Various examples of hole patterns are given in fig. 3.

Fig. 3a shows a hole pattern with an abrupt transition of the hole diameter, while the hole density remains the same.

In fig. 3b three zones can be distinguished, a first zone with holes of small diameter, an intermediate zone in which both holes of small diameter and holes of large diameter are present, and a final zone only with holes of large diameter. The hole density is the same over the entire length of the pipe.

Fig. 3c shows two abrupt transitions of the open surface, formed by the holes, in which a first zone with holes of small diameter is present. Following which a zone with holes of medium diameter is present. At the bottom a third zone with holes of large diameter is present.

In figs. 3a - 3c the hole density over the surface of the pipe is the same, i.e. the number of holes per unit surface is the same.

Fig. 3d shows a gradual increase of the open surface, in which the hole diameter increases continuously.

Fig. 3e shows a gradual transition from a small hole density to a large hole density, with the hole diameter remaining the same.

In the case of the stainless steel pipes currently in use, which are provided with slits over about 50% of the surface, the open surface over the entire length of the pipe is about 6.25 mm²/cm². The open surface of a plastic pipe which is perforated over 90% of the surface depends on the number of holes/cm² and on the size of the holes. Where the holes are round and of uniform size, and where the hole density is 28/cm², an open surface of 3.17, 4.95, 7.13 and 9.70 mm²/cm² at a respective hole diameter of 0.4, 0.5, 0.6 and 0.7 is obtained.

In an embodiment according to fig. 3a, it is possible, for example, for 40% of the surface of the plastic pipe to be perforated with holes having a diameter of 0.5 mm, and for 60% of the surface to be perforated with holes having a diameter of 0.7 mm. The open surface of the pipe is then 7.80 mm²/cm².

Experiments have been carried out with drainage pipes made from polyethylene (PE) according to the invention and with a drainage pipe of stainless steel according to the prior art. The results of these experiments are given in Table 1.

**Table 1**

| Experiment | Pipe material | Hole diameter | Hole density | Open surface | Result |
|---|---|---|---|---|---|
| 1 | PE | 0.5 mm | 28/cm² | 2.75 mm²/cm² | curd block did not stick |
| 2 | PE | 0.35 mm | 28/cm² | 1.35 mm²/cm² | curd block did not stick |
| 3 | PE | 0.5/0.35 mm | 28/cm² | 4 mm²/cm² | separated moisture after pressing 23.5 wt. % |
| 4 | st. steel | 11 x 0.8 mm¹ | 1.5/cm² | 6.25 mm²/cm² | separated moisture after pressing 22.0 wt. % |

| | | | | | |
|---|---|---|---|---|---|
| ¹ = slit dimensions | | | | | |

According to this example, with a larger open surface of the drainage pipe it should be possible to achieve 21 wt. % of separated moisture after pressing.

## Claims

1. Drainage pipe having perforations for use in a vertical drainage column for draining whey from a whey/curd mass, **characterized in that** the perforations are formed by small holes, wherein the hole size is in a range of 0,05 - 3 mm, while the hole density is in a range of 5 - 50,000 holes/cm², and **in that** the drainage pipe is made of plastics material.

2. Drainage pipe according to claim 1 **characterized in that** the pipe (2) is made of polyethylene (PE).

3. Drainage pipe according to claim 1 or 2 **characterized in that** the hole size and/or the density of the holes is varied over the surface of the pipe (2).

4. Drainage pipe as claimed in any one of claims 1-3 **characterized in that** the open surface, formed by the holes increases from one end of the pipe (2) to the other end of the pipe (2).

5. Drainage pipe according to any one of claims 1-4, **characterized in that** the increase of the open surface is uniform.

6. Drainage pipe according to any one of claims 1 to 5, **characterized in that** the open surface in the part of the pipe (2) which is being used as the top (2a) is made smaller than the open surface in the part of the pipe (2) which is being used as the bottom (2b).

7. Drainage pipe according to any of one of claims 1 to 6, **characterized in that** the hole density is 20-35/cm².

8. Drainage pipe according to claim 7, **characterized in that** the hole density is 25 - 30 holes/cm².

9. Drainage pipe according to claim 8, **characterized in that** the hole density is 28 holes/cm².

10. Drainage pipe according to any one of claims 1 to 9, **characterized in that** the hole size is 0.1 - 1 mm.

11. Drainage pipe according to claim 10, **characterized in that** the hole size is 0.3 - 0.5 mm.

12. Drainage pipe according to any one of claims 1 to 11, **characterized in that** the shape of the holes (4) is round.

13. Drainage pipe according to any one of claims 1 to 12, **characterized in that** the wall thickness of the pipe (2) is 5 mm.

14. Drainage pipe according to any one of claims 1 to 13, **characterized in that** the holes (4) are disposed in a regular grid pattern (11) in the pipe (2).

15. Drainage pipe according to any one of claims 1 to 13, **characterized in that** the holes (4) are disposed arbitrarily in the pipe (2).

16. Drainage pipe according to any one of claims 1 to 15, **characterized in that** knife cuts are present on the inside surface of the pipe (2).

17. Device for the drainage of whey from a whey/curd mass, comprising at least one drainage pipe in a vertical column (2), and also means for feeding in whey/curd mass (6) and draining whey (15) and discharging curd pieces(20) from said column, **characterized in that** the device comprises at least one drainage pipe (2) according to any one of claims 1 to 16.

## Patentansprüche

1. Dränagerohr mit Perforationen zur Verwendung in einer vertikalen Dränagesäule zum Ableiten von Molke aus einer Molke/Bruch-Masse, **dadurch gekennzeichnet, daß** die Perforationen durch kleine Löcher gebildet sind, wobei die Lochgröße im Bereich von 0,05 - 3 mm liegt, während die Lochdichte im Bereich von 5 - 50000 Löchern/cm³ liegt, und daß das Dränagerohr aus Kunststoff besteht.

2. Dränagerohr nach Anspruch 1, **dadurch gekennzeichnet, daß** das Rohr (2) aus Polyethylen (PE) besteht.

3. Dränagerohr nach Anspruch 1 oder 2, **dadurch gekennzeichnet, daß** die Lochgröße und/oder die Dichte der Löcher über die Fläche des Rohrs variieren.

4. Dränagerohr nach einem der Ansprüche 1-3, **dadurch gekennzeichnet, daß** die durch die Löcher gebildete offene Fläche von einem Ende des Rohrs (2) zum anderen Ende des Rohrs (2) zunimmt.

5. Dränagerohr nach einem der Ansprüche 1-4, **dadurch gekennzeichnet, daß** die Zunahme der offenen Fläche gleichmäßig ist.

6. Dränagerohr nach einem der Ansprüche 1-5, **dadurch gekennzeichnet, daß** die offene Fläche in dem Teil des Rohrs (2), der als oberes Teil (2a) verwendet wird, kleiner ist als die offene Fläche in dem Teil des Rohrs (2), der als untere Teil (2b) verwendet wird.

7. Dränagerohr nach einem der Ansprüche 1-6, **dadurch gekennzeichnet, daß** die Lochdichte 20-35/cm³ beträgt.

8. Dränagerohr nach Anspruch 7, **dadurch gekennzeichnet, daß** die Lochdichte 25-30 Löcher/cm³ beträgt.

9. Dränagerohr nach Anspruch 8, **dadurch gekennzeichnet, daß** die Lochdichte 28 Löcher/cm³ beträgt.

10. Dränagerohr nach einem der Ansprüche 1-9, **dadurch gekennzeichnet, daß** die Lochgröße 0,1 -1 mm beträgt.

11. Dränagerohr nach Anspruch 10, **dadurch gekennzeichnet, daß** die Lochgröße 0,3 -0,5 mm beträgt.

12. Dränagerohr nach einem der Ansprüche 1-11, **dadurch gekennzeichnet, daß** die Form der Löcher (4) rund ist.

13. Dränagerohr nach einem der Ansprüche 1-12, **dadurch gekennzeichnet, daß** die Wanddicke des Rohrs (2) 5 mm beträgt.

14. Dränagerohr nach einem der Ansprüche 1-13, **dadurch gekennzeichnet, daß** die Löcher (4) in einem regelmäßigen Gittermuster (11) im Rohr (2) angeordnet sind.

15. Dränagerohr nach einem der Ansprüche 1-13, **dadurch gekennzeichnet, daß** die Löcher (4) willkürlich in dem Rohr (2) angeordnet sind.

16. Dränagerohr nach einem der Ansprüche 1-15, **dadurch gekennzeichnet, daß** Messerschnitte auf der Innenseite des Rohrs (2) vorgesehen sind.

17. Vorrichtung zum Ableiten von Molke aus einer Molke/Bruch-Masse, mit wenigstens einem Dränagerohr in einer vertikalen Säule (2) und ferner mit einer Einrichtung zum Zuführen von Molke/Bruch-Masse (6) und zum Ableiten von Molke (15) und Ausgeben von Bruchteilen (20) aus der Säule, **dadurch gekennzeichnet, daß** die Vorrichtung wenigstens ein Dränagerohr (2) nach einem der Ansprüche 1 bis 16 aufweist.

## Revendications

1. Tuyau de drainage comportant des perforations destiné à être utilisé dans une colonne de drainage verticale pour évacuer le petit-lait d'une masse de petit-lait/caillé, **caractérisé en ce que** les perforations sont formées par des petits trous, dans lequel la taille des trous est dans une plage de 0,05 à 3 mm, tandis que la densité des trous est dans une plage de 5 à 50.000 trous/cm², et **en ce que** le tuyau de drainage est réalisé en matière plastique.

2. Tuyau de drainage selon la revendication 1, **caractérisé en ce que** le tuyau (2) est réalisé en polyéthylène (PE).

3. Tuyau de drainage selon la revendication 1 ou 2, **caractérisé en ce que** la taille des trous et/ou la densité des trous varient sur la surface du tuyau (2).

4. Tuyau de drainage selon l'une quelconque des revendications 1 à 3, **caractérisé en ce que** la surface ouverte, formée par les trous augmente d'une extrémité du tuyau (2) à l'autre extrémité du tuyau (2).

5. Tuyau de drainage selon l'une quelconque des revendications 1 à 4, **caractérisé en ce que** l'augmentation de la surface ouverte est uniforme.

6. Tuyau de drainage selon l'une quelconque des revendications 1, à 5, **caractérisé en ce que** la surface ouverte dans la partie du tuyau (2) qui est utilisée en tant que haut (2a) est plus petite que la surface ouverte dans la partie du tuyau (2) qui est utilisée en tant que fond (2b).

7. Tuyau de drainage selon l'une quelconque des revendications 1 à 6, **caractérisé en ce que** la densité des trous est de 20 à 35 par cm².

8. Tuyau de drainage selon la revendication 7, **caractérisé en ce que** la densité des trous est de 25 à 30 trous/cm².

9. Tuyau de drainage selon la revendication 8, **caractérisé en ce que** la densité des trous est de 28 trous/cm².

10. Tuyau de drainage selon l'une quelconque des revendications 1 à 9, **caractérisé en ce que** la taille des trous est de 0,1 à 1 mm.

11. Tuyau de drainage selon la revendication 10, **caractérisé en ce que** la taille des trous est de 0,3 à 0,5 mm.

12. Tuyau de drainage selon l'une quelconque des revendications 1 à 11, **caractérisé en ce que** la forme des trous (4) est ronde.

13. Tuyau de drainage selon l'une quelconque des revendications 1 à 12, **caractérisé en ce que** l'épaisseur de paroi du tuyau (2) est de 5 mm.

14. Tuyau de drainage selon l'une quelconque des revendications 1 à 13, **caractérisé en ce que** les trous (4) sont disposés en un motif de grille régulier (11) dans le tuyau (2).

15. Tuyau de drainage selon l'une quelconque des revendications 1 à 13, **caractérisé en ce que** les trous (4) sont disposés arbitrairement dans le tuyau (2).

16. Tuyau de drainage selon l'une quelconque des revendications 1 à 15, **caractérisé en ce que** des entailles sont présentes sur la surface intérieure du tuyau (2).

17. Dispositif pour l'évacuation du petit-lait d'une masse de petit-lait/caillé, comprenant au moins un tuyau de drainage dans une colonne verticale (2) et également des moyens pour introduire un volume de petit-lait/caillé (6) et évacuer le petit-lait (15) et décharger des morceaux de caillé (20) de ladite colonne, **caractérisé en ce que** le dispositif comprend au moins un tuyau de drainage (2) selon l'une quelconque des revendications 1 à 16.
